Europäisches Patentamt

European Patent Office

Office européen des brevets

(11) Veröffentlichungsnummer: **0 016 458**
**B1**

(12) # EUROPÄISCHE PATENTSCHRIFT

(45) Veröffentlichungstag der Patentschrift:
06.04.83

(51) Int. Cl.³: **H 02 H 3/34**

(21) Anmeldenummer: 80101422.6

(22) Anmeldetag: 18.03.80

(54) **Fehlerstromschutzschalter, der auch auf Gleichstromfehlerströme anspricht.**

(30) Priorität: 26.03.79 JP 35270/79

(43) Veröffentlichungstag der Anmeldung:
01.10.80 Patentblatt 80/20

(45) Bekanntmachung des Hinweises auf die Patenterteilung:
06.04.83 Patentblatt 83/14

(84) Benannte Vertragsstaaten:
AT BE DE FR GB IT NL SE

(56) Entgegenhaltungen:
DE-A-2 421 747
DE-C-971 476
FR-A-1 365 154
FR-A-2 025 082
FR-A-2 321 208
US-A-3 786 356

(73) Patentinhaber: FUJI ELECTRIC CO. LTD., 1-1,
Tanabeshinden, Kawasaki-ku, Kawasaki 210 (JP)

(72) Erfinder: Yamaki, Shouichi, 2831-70 Suehiro-cho
Ootawara-shi, Tochigi (JP)

(74) Vertreter: Mehl, Ernst, Dipl.-Ing., Postfach 22 01 76,
D-8000 München 22 (DE)

# Fehlerstromschutzschalter, der auch auf Gleichstromfehlerströme anspricht

Die Erfindung bezieht sich auf einen Fehlerstromschutzschalter zum Abschalten von Verbrauchern auch bei Gleichstromfehlerströmen, der mit Auslöser, Schaltschloss und mit einem Summenstromwandler arbeitet, der eine erste Sekundärwicklung aufweist, die an einem Oszillator angeschlossen ist und eine zweite Sekundärwicklung, die mit einer Erregerwicklung eines Magnetauslösers verbunden ist.

Bei einem solchen bekannten Fehlerstromschutzschalter (FR-A 2 321 203) ist der Summenstromwandler ausser mit der Sekundärwicklung, die mit dem Auslöser verbunden ist, mit einer weiteren Sekundärwicklung versehen, welche an einem Testoszillator angeschlossen ist. Das Signal des Testoszillators wird dabei auf die am Summenstromwandler in üblicher Weise angeordnete Sekundärwicklung übertragen. Das Abschaltkriterium wird hierbei durch die Fähigkeit des Kerns des Summenstromwandlers bestimmt, dieses aufgeprägte Oszillatorsignal ungeschwächt oder geschwächt zu übertragen. Dabei kann die Schwächung des übertragenen Signals durch eine Sättigung des Kerns des Summenstromwandlers aufgrund eines auf seiner Primärwicklung fliessenden Gleichstromfehlerstroms bedingt sein. Ein solcher Fehlerstromschutzschalter erfordert empfindliche Elektronik, um ein solches schwaches transformiertes Signal auszuwerten.

Die jüngere Entwicklung auf dem Gebiet der Elektronik mit immer zahlreicheren Geräten mit Gleichstromkomponenten und der Trend zu höheren Gerätearbeitsspannungen hat zu einem wachsenden Bedarf an solchen Fehlerstromschutzschaltern geführt, die auch auf Gleichstromfehlerströme ansprechen können.

Auch andere bereits in der Literatur vorgeschlagene Fehlerstromschutzschalter, die auch auf Gleichstromfehlerströme ansprechen, sind in der Regel aufwendig und benötigen umfangreiche Elektronik.

Der Erfindung liegt die Aufgabe zugrunde, einen Fehlerstromschutzschalter zu entwickeln, der im Prinzip mit einem bewährten Magnetauslöser auskommt, im wesentlichen mit einem Oszillator handelsüblicher Art arbeitet und eine magnetische Auswertung vornimmt, um auf Gleichstromfehlerströme ansprechen zu können.

Die Lösung der geschilderten Aufgabe liegt in einem Fehlerstromschutzschalter mit den Merkmalen,

– dass der Magnetauslöser an Schenkeln seines Jochs zwei Erregerwicklungen, eine erste und eine zweite, aufweist,

– dass die erste Erregerwicklung mit dem Oszillator verbunden ist, wobei die zweite Erregerwicklung mit der zweiten Sekundärwicklung verbunden ist, und

– dass die beiden Erregerwicklungen so aufeinander abgestimmt sind, dass bei Betrieb des Oszillators die von ihnen im Magnetkreis des Magnetauslösers im fehlerstromfreien Zustand erzeugten Magnetflüsse einander gleich- und entgegengerichtet sind.

Ein solcher Fehlerstromschutzschalter benötigt also im wesentlichen nur eine weitere Erregerwicklung auf dem Joch des Magnetauslösers.

Im fehlerfreien Zustand beaufschlagt der Oszillator einmal die erste Erregerwicklung des Magnetauslösers direkt und zum anderen die zweite Erregerwicklung über die beiden auf dem Kern des Summenstromwandlers aufgebrachten Sekundärwicklungen, die als Primär- und Sekundärwicklung eines Transformators wirken. Die magnetischen Flüsse, die im Magnetkreis des Magnetauslösers induziert werden, heben sich dann nach Betrag und Richtung auf, so dass bei einem Haltemagneten üblicher Art der von einem Dauermagneten über Joch und Anker getriebene Magnetfluss den Anker gegen die Kraft einer Abzugsfeder festhalten kann.

Ein Gleichstromfehlerstrom induziert im Magnetkern des Summenstromwandlers einen Magnetfluss, der den Arbeitspunkt verschiebt, so dass das Signal über die beiden Sekundärwicklungen geschwächt übertragen wird. Dadurch wird im Magnetauslöser das magnetische Gleichgewicht gestört und die zweite Erregerwicklung kann einen Fluss durch den Magnetkreis treiben, der die Wirkung des Permanentmagnetflusses aufhebt, so dass der Anker vom Joch abfallen kann. Der abfallende Anker kann in üblicher Weise ein Schaltschloss entklinken, wodurch die Schaltkontakte in den zu überwachenden Leitungen, die durch den Summenstromwandler hindurchgeführt sind, geöffnet werden.

Es ist günstig, wenn der Kern des Summenstromwandlers durch zu erwartende Gleichstromfehlerströme in Sättigung betrieben wird. Dadurch wird bei Fehlerströmen mit Gleichstromanteilen die Übertragung des Oszillatorsignals über die beiden Sekundärwicklungen auf dem Summenstromwandler besonders stark geschwächt.

Es ist vorteilhaft, die erste Sekundärwicklung, den Oszillator und die erste Erregerwicklung in Reihe zu schalten.

Die Erfindung soll anhand eines schematisch wiedergegebenen Ausführungsbeispiels näher erläutert werden:

In Fig. 1 ist ein Schaltungsaufbau des Fehlerstromschutzschalters dargestellt.

In Fig. 2 ist ein Diagramm wiedergegeben, das die Übertragung von der ersten zur zweiten Sekundärwicklung des Summenstromwandlers im fehlerstromfreien Betrieb veranschaulicht. Auf der Ordinate ist der magnetische Fluss und auf der Abszisse die magnetische Feldstärke aufgetragen.

In Fig. 3 ist anhand der Darstellung nach Fig. 2 die Arbeitsweise des Fehlerstromschutzschalters bei einem Fehlerstrom mit Gleichstromkomponente veranschaulicht.

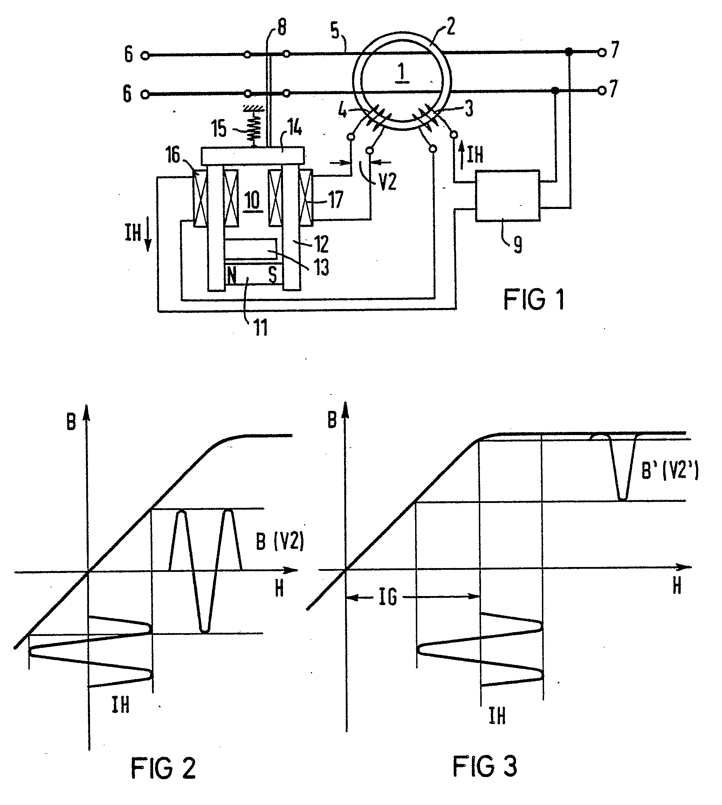

Der Fehlerstromschutzschalter nach Fig. 1 weist einen Summenstromwandler 1 mit Ringkern 2 auf. Auf dem Ringkern sind eine erste Sekundärwicklung 3 und eine zweite Sekundärwicklung 4 angeordnet. Durch den Ringkern 2 sind die zu überwachenden Leitungen 5 hindurchgeführt, genauer gesagt: an den Anschlussklemmen 6 ist das Speisenetz und an den Anschlussklemmen 7 der zu schützende Verbraucher anzuschliessen. In den zu überwachenden Leitungen 5 liegen Schaltkontakte 8. Ein Oszillator 9 ist zur Stromversorgung lastseitig hinter den Schaltkontakten 8 an die zu überwachenden Versorgungsleitungen 5 angeschlossen. Dieser Oszillator handelsüblicher Art erzeugt eine Wechselspannung höherer Frequenz als die der Netzfrequenz. Auf die Schaltkontakte 8 wirkt in üblicher Weise ein Magnetauslöser 10 ein: Wenn der Anker 14 abfällt, kann in üblicher Weise ein Schaltschloss entklinkt werden, das die Kontakte 8 öffnet. Der Magnetauslöser 10 kann als polarisiertes Relais oder als Haltemagnet ausgebildet sein. Er weist in üblicher Art einen Dauermagneten 11 und einen magnetischen Nebenschluss 13 auf. Wesentlich ist jedoch, dass auf dem Joch 12 des Magnetauslösers zwei Erregerwicklungen 16 und 17 angeordnet sind, die in der geschilderten besonderen Weise mit den zwei Sekundärwicklungen 3 und 4 des Summenstromwandlers und dem Oszillator 9 verbunden sind. Im Ausführungsbeispiel ist die erste Sekundärwicklung 3 mit dem Ausgang des Oszillators 9 und der ersten Erregerwicklung 16 in Reihe verbunden. Die zweite Sekundärwicklung 4 ist mit der zweiten Erregerwicklung 17 verbunden.

Durch den magnetischen Nebenschluss 13 kann der Magnetfluss durch den Anker 14 so eingestellt werden, dass der Anker 14 gegen die Kraft der Abzugsfeder 15 im fehlerstromfreien Zustand noch sicher gehalten wird.

Die beiden Erregerwicklungen 16, 17 sind so aufeinander abgestimmt, dass bei Betrieb des Oszillators 9 die von ihnen im Magnetkreis des Magnetauslösers 10 im fehlerstromfreien Zustand erzeugten Magnetflüsse einander gleich- und entgegengerichtet sind. Der vom Dauermagneten 11 hervorgerufene magnetische Zustand im Joch 12 und im Anker 14 bleibt dann unbeeinflusst. Im fehlerfreien Zustand wird die Spannung am Ausgang des Oszillators 9 einmal über die Sekundärwicklung 3 und 4 des Summenstromwandlers 1 als Spannung V2 zur zweiten Erregerwicklung 17 übertragen und zum anderen direkt an die erste Erregerwicklung 16 angelegt. Die Spannung V2 wird durch den Strom IH in die erste Sekundärwicklung 3 induziert. Im Fehlerfall überwiegt die treibende Spannung an der zweiten Erregerwicklung 17.

Im Diagramm nach Fig. 2 ist veranschaulicht, wie die beiden Sekundärwicklungen 3 und 4 auf dem Kern 2 des Summenstromwandlers 1 als Primärwicklung und Sekundärwicklung eines gewöhnlichen Transformators arbeiten. Auf der Ordinate ist die magnetische Induktion und auf der Abszisse die magnetische Feldstärke aufgetragen. Die magnetische Kennlinie wird mit dem Wechselstrom IH, der vom Oszillator 9 in die erste Sekundärwicklung 3 hineinfliesst, beaufschlagt. Es entsteht dann eine magnetische Induktion B und auf der Sekundärseite, also am Ausgang der zweiten Sekundärwicklung 4, und eine entsprechende Spannung V2. In Fig. 2 ist die magnetische Kennlinie im Arbeitsbereich vereinfacht als lineare Kennlinie dargestellt. Ein vom Wechselstrom IH erzeugter magnetischer Fluss B induziert sekundärseitig die Spannung V2.

Wenn der Magnetkern 2 des Summenstromwandlers 1 infolge eines Fehlerstroms magnetisiert wird, verschiebt sich der Arbeitspunkt bezüglich der beiden Sekundärwicklungen 3 und 4 infolge des üblichen nichtlinearen Verhaltens der Magnetkennlinie. Man kann aber auch vorzugsweise die magnetische Sättigung ausnützen.

Bei einem Kern 2 des Summenstromwandlers der für zu erwartende Fehlerströme in Sättigung geht, ergeben sich die Verhältnisse nach Fig. 3. Ein Fehlerstrom, im Ausführungsbeispiel ein Gleichstromfehlerstrom IG, bewirkt die dargestellte Verschiebung des Arbeitspunktes in den Übergang der magnetischen Kennlinie in die Sättigung. In der zweiten Sekundärwicklung 4 – anhand des Ausführungsbeispiels nach Fig. 1 orientiert – wird dann vom Wechselstrom IH durch die erste Sekundärwicklung 3 auf die zweite Sekundärwicklung 4 nur die niedrigere Spannung V2' übertragen. Verständlicherweise erfolgt diese Spannungsverminderung hinsichtlich des Betriebszustandes nach Fig. 2 auch dann, wenn beispielsweise ein Gleichstromfehlerstrom auftritt, der grösser als der in Fig. 3 dargestellte, also grösser als der Sättigungsfehlerstrom, ist.

Wenn bei einem Fehlerstromschutzschalter in der Darstellung nach Fig. 1 die Kontakte 8 geschlossen werden, beginnt der Oszillator 9 zu arbeiten. Er erregt die erste Sekundärwicklung 3 des Summenstromwandlers 1 und die erste Erregerwicklung 16 des Magnetauslösers 10 mit einem Wechselstrom IH. Dadurch wird auch die Spannung V2 in der zweiten Sekundärwicklung 4 – in dieser Funktionsweise ist das die eigentliche Sekundärwicklung – erzeugt, die an der zweiten Erregerwicklung 17 des Magnetauslösers 10 anliegt. Im fehlerstromfreien Zustand hebt der magnetische Fluss, der durch die zweite Erregerwicklung 17 hervorgerufen würde, den magnetischen Fluss der Erregerwicklung 16 auf. Der magnetische Fluss, wie er vom Dauermagneten 11 im Joch 12 und Anker 14 hervorgerufen wird, bleibt dadurch unberührt.

Wenn ein Fehlerstrom in den zu überwachenden Leitungen auftritt, sinkt die in der zweiten Sekundärwicklung 4 des Summenstromwandlers 1 induzierte Spannung V2 auf einen niedrigeren Wert V2', so dass der magnetische Fluss, den die zweite Erregerwicklung 17 erzeugt, entsprechend absinkt. Der von der Erregerwicklung 16 hervorgerufene Magnetfluss bleibt jedoch unverändert, so dass jetzt das magnetische Gleichgewicht verloren geht. Bei einem als polarisierten Relais ausgebildeten Magnetauslöser 10 bewirkt der jetzt auftretende magnetische Wechselfluss während einer Halbwelle in bekannter Weise eine Schwächung bzw. Unterdrückung des vom Dauermagneten 11 hervorgerufenen Gleichmagnetflusses. Dadurch fällt der Anker 13 in dieser Halbwelle ab, was zum Öffnen der Kontakte 8 führt.

Vorzugsweise arbeitet der Fehlerstromschutzschalter nach der Erfindung mit einem Kern des Summenstromwandlers, der durch Fehlerströme, die zum Auslösen führen sollen, in Sättigung geht.

## Patentansprüche

1. Fehlerstromschutzschalter zum Abschalten von Verbrauchern auch bei Gleichstromfehlerströmen, der mit Auslöser, Schaltschloss und mit einem Summenstromwandler (1) arbeitet, der eine erste Sekundärwicklung (3) aufweist, die an einem Oszillator (9) angeschlossen ist und eine zweite Sekundärwicklung (4), die mit einer Erregerwicklung eines Magnetauslösers verbunden ist, dadurch gekennzeichnet,
– dass der Magnetauslöser (10) an Schenkeln seines Jochs (12) zwei Erregerwicklungen (16, 17), eine erste (16) und eine zweite (17), aufweist,
– dass die erste Erregerwicklung (16) mit dem Oszillator (9) verbunden ist, wobei die zweite Erregerwicklung (17) mit der zweiten Sekundärwicklung (4) verbunden ist, und
– dass die beiden Erregerwicklungen (16, 17) so aufeinander abgestimmt sind, dass bei Betrieb des Oszillators (9) die von ihnen im Magnetkreis des Magnetauslösers (10) im fehlerstromfreien Zustand erzeugten Magnetflüsse einander gleich- und entgegengerichtet sind.

2. Fehlerstromschutzschalter nach Anspruch 1, dadurch gekennzeichnet, dass der Kern (2) des Summenstromwandlers (1) durch zu überprüfende Gleichstromfehlerströme in Sättigung geführt wird.

3. Fehlerstromschutzschalter nach Anspruch 1, dadurch gekennzeichnet, dass die erste Sekundärwicklung (3), der Oszillator (9) und die erste Erregerwicklung (16) in Reihe geschaltet sind.

## Claims

1. Fault current safety switch for disconnecting users even in the case of direct current fault currents, which operates with a tripping device, a switch lock and a summation current transformer (1) which comprises a first secondary winding (3) connected to an oscillator (9) and comprises a second secondary winding (4) connected to an excitation winding of a magnetic tripping device, characterised in
– that the magnetic tripping device (10) has two excitation windings (16, 17), a first (16) and a second (17), on arms of its yoke (12),

– that the first excitation winding (16) is connected to the oscillator (9), the second excitation winding (17) being connected to the second secondary winding (4), and
– that the two excitation windings (16, 17) are tuned to one another in such manner that on operation of the oscillator (9), the magnetic fluxes produced by said excitation windings in the magnetic circuit of the magnetic tripping device (10) in the fault current free state, are unidirectional and opposite in relation to one another.

2. Fault current safety switch as claimed in claim 1, characterised in that the core (2) of the summation current transformer (1) is put into saturation by direct current fault currents to be investigated.

3. Fault current safety switch as claimed in claim 1, characterised in that the first secondary winding (3), the oscillator (9) and the first excitation winding (16) are connected in series.

## Revendications

1. Disjoncteur de protection à courant de défaut pour débrancher des utilisateurs même dans le cas de courants de défauts continus, opérant avec un déclencheur, un verrou de maintien et un transformateur de sommation (1) comportant un premier enroulement secondaire (3) relié à un oscillateur (9) et un second enroulement secondaire (4) qui est relié à un enroulement d'excitation d'un déclencheur magnétique, caractérisé par le fait
– que le déclencheur magnétique (10) comporte sur les branches d'une culasse (12) des enroulements d'excitation (16, 17), un premier (16) et un second (17),
– que le premier enroulement (16) est relié à l'oscillateur (9), le second enroulement (17) étant relié à l'enroulement secondaire (4), et
– que les deux enroulements d'excitation (16, 17) sont accordés entre eux de telle manière que, lors du fonctionnement de l'oscillateur (9), les flux magnétiques produits par eux dans le circuit magnétique de déclencheur magnétique (10), à l'état sans courant de défaut, sont égaux et de sens opposé entre eux.

2. Disjoncteur de protection à courant continu de défaut selon la revendication 1, caractérisé par le fait que le noyau (2) du transformateur de sommation (1) est amené dans son état de saturation par les courants de défauts continus qui sont à contrôler.

3. Disjoncteur de protection à courant de défaut selon la revendication 1, caractérisé par le fait que le premier enroulement secondaire (3), l'oscillateur (9) et le premier enroulement d'excitation (16) sont montés en série.

FIG 1

FIG 2

FIG 3